# FASCICULE DE BREVET EUROPEEN

(11) **EP 1 452 750 B1**
(45) Date de publication et mention de la délivrance du brevet: **09.06.2010**
(21) Numéro de dépôt: 04290365.8
(22) Date de dépôt: 11.02.2004
(51) Int. Cl.: F16C 7/02

(54) **Bielle anti-vibratoire et son procede de fabrication**
Schwingungsdämpfende Pleuelstange und Verfahren zu ihrer Herstellung
Antivibration connecting rod and method for manufacturing the same

(30) Priorité: 27.02.2003 FR 0302393
(43) Date de publication de la demande: 01.09.2004
(73) Titulaire: HUTCHINSON, 75008 Paris (FR)
(72) Inventeur: Bodin, Laurent, 45130 Espieds en Beauce (FR); Lede, arnaud, 28200 Chateaudun (FR)
(74) Mandataire: Bérogin, Francis

(56) Documents cités:
- EP-A- 0 621 410
- EP-A- 0 647 787
- EP-A- 0 691 481
- JP-A- 04 351 335
- JP-A- 2002 021 867
- US-A- 5 513 433

## Description

La présente invention est relative aux bielles anti-vibratoires, utilisées notamment pour la reprise de couples des blocs motopropulseurs de véhicules automobiles.

L'invention concerne plus particulièrement une bielle anti-vibratoire comprenant :
- un corps métallique, allongé selon une direction longitudinale et qui relie entre eux des premier et deuxième manchons d'extrémité appartenant au corps, ces premier et deuxième manchons comportant respectivement des premier et deuxième passages traversant le corps et s'étendant respectivement selon des premier et deuxième axes, le premier manchon étant pourvu d'au moins un premier bord entourant le premier passage,
- au moins une armature intérieure entourée par le premier manchon et mobile à l'intérieur du premier passage, ladite armature intérieure présentant une forme tubulaire centrée sur ledit premier axe,
- au moins une bague entourant l'armature intérieure et adaptée pour être insérée et maintenue dans le premier passage, cette bague s'étendant également selon le premier axe et présentant une forme tubulaire centrée sur ledit premier axe, et
- au moins une liaison souple en élastomère, interposée entre l'armature intérieure et la bague, ladite liaison souple étant adhérisée et surmoulée sur l'armature intérieure et sur la bague.

Le document EP-A-0647787 décrit un exemple de bielle selon le préambule de la revendication 1.

On connaît déjà des bielles anti-vibratoires de ce type dans lesquelles l'ensemble constitué de la bague, de la liaison souple, et de l'armature interne, forme un élément généralement appelé "flex" par l'Homme du Métier. On connaît notamment des flex comportant une bague en matière plastique. Dans ce cas, le flex est emmanché serré dans un manchon de corps métallique.

Il peut être nécessaire d'augmenter la tenue à un effort de démanchement du flex dans son manchon. Lorsque le corps est constitué d'une pièce métallique moulée, il est alors possible de réaliser une ou plusieurs dépouille(s) adaptée(s) pour augmenter les contraintes entre le flex et son manchon.

Cependant, cette solution n'est pas toujours souhaitable (géométrie difficile à optimiser au plan des angles et de la rugosité) ou possible (corps extrudé lisse en sortie de filière).

La présente invention a notamment pour but de fournir des bielles du genre en question économiques et/ou faciles à fabriquer et/ou présentant une tenue plus importante à un effort de démanchement du flex dans son manchon. Ces buts sont atteints au moyen d'une bielle anti-vibratoire selon la revendication 1 et d'un procédé de fabrication d'une telle bielle selon la revendication 7.

La bielle selon l'invention est **caractérisée en ce qu**'au moins le premier bord du premier manchon est pourvu d'au moins une zone déformée par poinçonnage du corps métallique, de manière à former une protubérance coopérant avec la bague pour augmenter la tenue à un effort de démanchement.

Grâce à cette protubérance, on augmente l'interaction entre le flex et le manchon dans lequel il est inséré. La tenue à un effort de démanchement est accrue. L'opération de poinçonnage est économique et simple à mettre en oeuvre.

Dans des modes de réalisation préférés de la bielle selon l'invention, on peut éventuellement avoir recours en outre à l'une et/ou à l'autre des dispositions suivantes :
- la bielle comporte un deuxième bord entourant le premier passage, avec au moins une zone déformée par poinçonnage du corps métallique, de manière à former une protubérance coopérant avec la bague, les premier et deuxième bords entourant les orifices axiaux du premier passage, autrement dit la bielle est poinçonnée sur deux de ses faces,
- la bielle comporte plusieurs zones déformées par poinçonnage du corps métallique, réparties autour du premier passage,
- la bielle comporte une zone déformée par poinçonnage du corps métallique, entourant le premier passage de manière continue,
- au moins l'une des zones déformées par poinçonnage du corps métallique exerce une contrainte sur la bague adaptée pour déformer cette dernière en direction du premier axe, et
- la bague est en matière plastique.

Selon un autre aspect, l'invention concerne un procédé de fabrication d'une bielle anti-vibratoire telle que mentionnée ci-dessus. Ce procédé comprend les étapes consistant à :
- emmancher, dans le premier passage et en faisant sensiblement coïncider les axes dans lesquels s'étendent le premier passage et la bague, l'ensemble constitué de la bague, de la liaison souple et de l'armature interne, et à
- déformer par poinçonnage au moins une zone du premier bord du premier manchon, de manière à former une protubérance coopérant avec la bague pour augmenter la tenue à un effort de démanchement.

Dans des modes de mise en oeuvre du procédé selon l'invention, on peut éventuellement avoir recours en outre à l'une et/ou à l'autre des dispositions suivantes :
- on déforme plusieurs secteurs du premier bord du premier manchon,
- on déforme le premier bord du premier manchon, de manière circulaire et continue autour du premier passage, et
- on procède à un poinçonnage du premier et d'un deuxième bords entourant les orifices axiaux du premier passage.

D'autres caractéristiques et avantages de l'invention apparaîtront au cours de la description détaillée suivante de deux de ses modes de réalisation, donnés à titre d'exemples non limitatifs en regard des dessins joints.

Sur les dessins :
- la figure 1 est une vue en perspective d'une bielle conforme à la présente invention, avant déformation par poinçonnage conformément au procédé selon l'invention,
- la figure 2 est une coupe longitudinale, selon le plan II-II de l'un des manchons de la bielle représentée sur la figure 1,
- la figure 3 représente, selon une coupe analogue à celle de la figure 2, le manchon de la figure 2, après poinçonnage,
- la figure 4 représente schématiquement, vu de dessus, un manchon de bielle conforme à l'invention, selon un premier mode de réalisation,
- la figure 5 représente, de manière analogue à la figure 4, un deuxième mode de réalisation de la bielle selon l'invention, et
- la figure 6 représente, selon une coupe analogue à celle des figures 2 et 3, une variante des premier et deuxième modes de réalisation de la bielle selon l'invention.

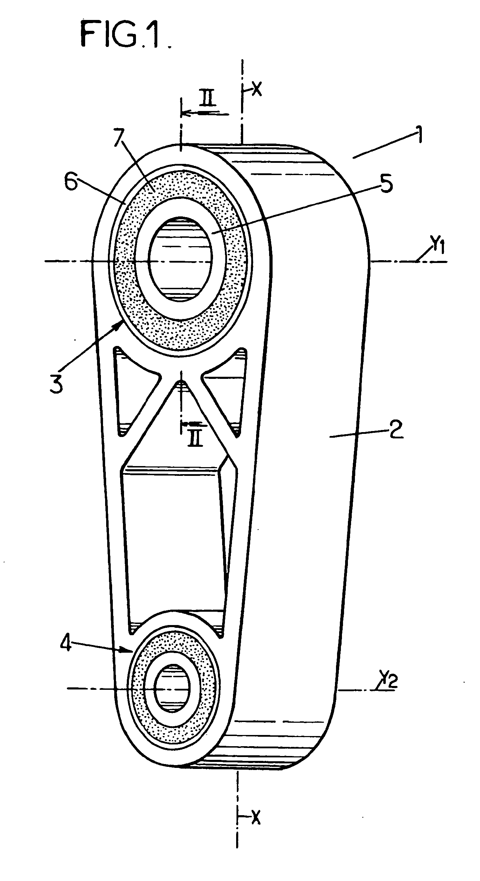

Comme représenté sur la figure 1, une bielle 1 fabriquée conformément au procédé selon l'invention comprend un corps allongé métallique 2, qui s'étend selon une direction longitudinale X et qui relie entre eux des premier 3 et deuxième 4 manchons. Ces premier 3 et deuxième 4 manchons sont centrés respectivement sur des premier Y1 et deuxième Y2 axes qui sont perpendiculaires à la direction longitudinale X.

Le corps 2 est par exemple constitué d'un matériau ductile tel que l'aluminium. Le corps 2 est par exemple réalisé par extrusion.

Par mesure de simplification, seul le premier manchon 3 est décrit de manière détaillée ci-dessous. La structure de la bielle 1 au niveau du deuxième manchon 4 peut en effet être aisément déduite par l'Homme du Métier, de la description faite ci-dessous de la bielle 1 au niveau du premier manchon 3.

Le premier manchon 3 entoure une armature intérieure 5. L'armature intérieure 5 est métallique et présente, de la même façon que le premier manchon 3, une forme tubulaire centrée sur le premier axe Y1.

Au niveau du premier manchon 3, la bielle 1 comporte également une bague 6. Cette bague 6 est en matière plastique et a une forme tubulaire également centrée sur le premier axe Y1.

L'armature intérieure 5 est reliée à la bague 6 par une liaison souple 7. Cette liaison souple 7 se présente par exemple sous la forme d'un corps en élastomère adhérisé et surmoulé sur l'armature intérieure 5 et sur la bague 6.

L'armature 5, la bague 6 et la liaison souple 7 forment un flex destiné à être emmanché dans le premier manchon 3. La liaison souple 7 permet d'amortir les déplacements relatifs entre l'armature 5 et le corps 2.

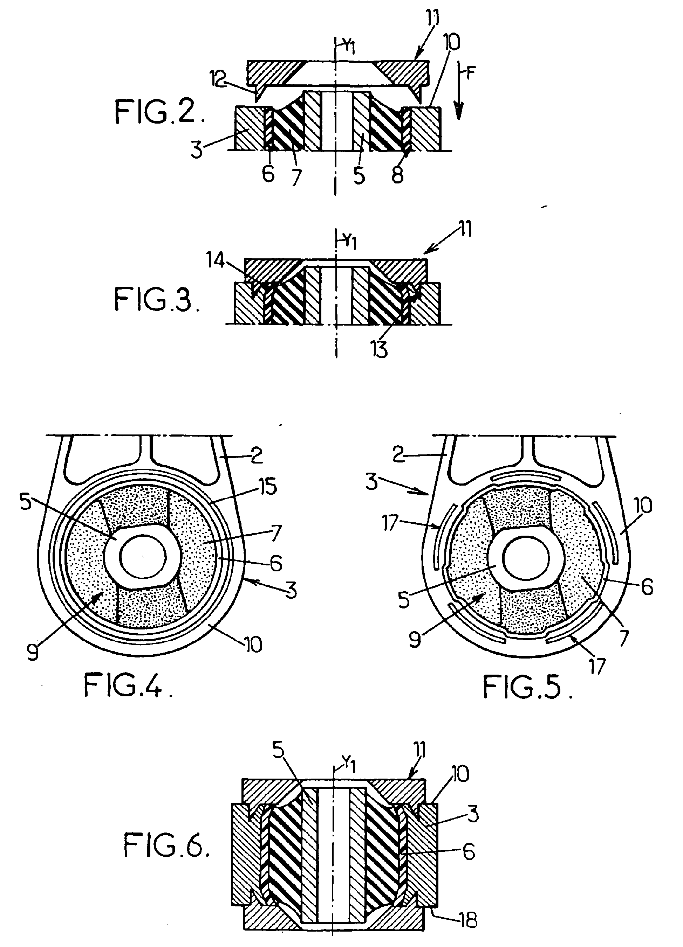

Comme représenté sur la figure 2, le premier manchon 3 forme une paroi cylindrique de révolution autour du premier axe Y1. La surface interne 8 de cette paroi cylindrique délimite un passage 9 dans lequel est emmanchée serrée la bague 6.

Le passage 9 est entouré d'un premier bord 10 s'étendant, dans le cas présent, dans un plan perpendiculaire au premier axe Y1.

Conformément au procédé selon l'invention, un outil de poinçonnage 11 est déplacé selon le premier l'axe Y1 en direction du premier bord 10 (voir la flèche F).

L'outil de poinçonnage 11 comporte un poinçon 12 avec une face 13 orientée de manière à déplacer, au voisinage du poinçon 12, de la matière vers la bague 6, c'est-à-dire vers le premier axe Y1.

Comme représenté sur la figure 3, dans son déplacement F, l'outil de poinçonnage 11 poinçonne le premier manchon 3. La matière déplacée par le poinçon 12 exerce alors une contrainte sur la bague 6. Cette contrainte déforme la bague 6 en direction du premier axe Y1. La force d'interaction entre le premier manchon 3 et la bague 6 est ainsi accrue. La tenue à un effort de démanchement du flex dans le premier manchon 3 est ainsi augmentée.

La zone déformée du premier manchon par le poinçon 12 forme une protubérance ou un bourrelet 14 qui interagit avec la bague 6.

La figure 4 représente un premier mode de réalisation de la bielle 1 selon l'invention sur laquelle a été réalisée, au moins sur le premier bord 10, par poinçonnage, une déformation continue 15 tout autour du passage 9.

La figure 5 représente un deuxième mode de réalisation de la bielle 1 selon l'invention sur laquelle ont été réalisées, par poinçonnage, au moins sur le premier bord 10, cinq zones régulièrement angulairement réparties autour du premier axe Y1.

Comme représenté sur la figure 6, l'opération de poinçonnage décrite ci-dessus peut être effectuée sur le premier bord 10, et également sur un deuxième bords 18 entourant les orifices axiaux du premier passage 9.

La bielle et le procédé de fabrication de cette bielle décrits ci-dessus peuvent, sans sortir du cadre de l'invention, comporter de nombreuses variantes.

En particulier, les premier Y1 et deuxième Y2 axes ne sont pas nécessairement parallèles entre eux ni perpendiculaires à la direction longitudinale X. De même, le premier manchon 3 n'a pas nécessairement une forme tubulaire centrée sur le premier axe Y1, sa géométrie peut être différente et éventuellement non centrée sur le premier axe Y1. Il en est de même pour la bague 6. En outre, le premier bord 10 ne s'étend pas nécessairement dans un plan perpendiculaire au premier axe Y1 et peut présenter des zones de poinçonnage qui ne sont ni nécessairement régulièrement angulairement réparties autour du premier axe Y1, ni nécessairement au nombre de 5 (ce nombre est compris entre 1 et n, n n'étant pas limité).

## Revendications

1. Bielle anti-vibratoire comprenant :
- un corps métallique (2), allongé selon une direction longitudinale (X) et qui relie entre eux des premier (3) et deuxième (4) manchons d'extrémité appartenant au corps (2), ces premier (3) et deuxième (4) manchons comportant respectivement des premier (9) et deuxième passages traversant le corps (2) et s'étendant respectivement selon des premier (Y1) et deuxième (Y2) axes, le premier manchon (3) étant pourvu d'au moins un premier bord (10) entourant le premier passage (9),
- au moins une armature intérieure (5) entourée par le premier manchon (3) et mobile à l'intérieur du premier passage (9), ladite armature intérieure (5) présentant une forme tubulaire centrée sur ledit premier axe (Y1),
- au moins une bague (6) entourant l'armature intérieure (5) et adaptée pour être insérée et maintenue dans le premier passage (9), cette bague (6) s'étendant également selon le premier axe (Y1) et présentant une forme tubulaire centrée sur ledit premier axe (Y1),
- au moins une liaison souple (7) en élastomère, interposée entre l'armature intérieure (5) et la bague (6), ladite liaison souple (7) étant adhérisée et surmoulée sur l'armature intérieure (5) et sur la bague (6),
**caractérisée en ce qu'**au moins le premier bord (10) du premier manchon (3) est pourvu d'au moins une zone déformée par poinçonnage du corps métallique (2), de manière à former une protubérance (13) coopérant avec la bague (6) pour augmenter la tenue à un effort de démanchement.

2. Bielle anti-vibratoire selon la revendication 1, comportant un deuxième bord (14) entourant le premier passage (9), avec au moins une zone déformée (15, 17) par poinçonnage du corps métallique (2), de manière à former une protubérance coopérant avec la bague (6), les premier (10) et deuxième (14) bords entourant les orifices axiaux du premier passage (9).

3. Bielle anti-vibratoire selon l'une des revendications précédentes, comportant plusieurs zones (17) déformées par poinçonnage du corps métallique (2), réparties autour du premier passage (9).

4. Bielle anti-vibratoire selon l'une des revendications 1 et 2, comportant une zone déformée (15) par poinçonnage du corps métallique (2), entourant le premier passage (9) de manière continue.

5. Bielle anti-vibratoire selon l'une des revendications précédentes, dans lequel au moins l'une des zones déformées (13,17) par poinçonnage du corps métallique (2) exerce une contrainte sur la bague (6) adaptée pour déformer cette dernière en direction du premier axe (Y1).

6. Bielle anti-vibratoire selon l'une des revendications précédentes, dans laquelle la bague (6) est en matière plastique.

7. Procédé de fabrication d'une bielle (1) anti-vibratoire selon l'une des revendications précédentes comprenant les étapes consistant à :
- emmancher, dans le premier passage (9) et en faisant sensiblement coïncider les axes (Y1) dans lesquels s'étendent le premier passage (9) et la bague (6), l'ensemble constitué de la bague (6), de la liaison souple (7) et de l'armature intérieure (5), et à
- déformer par poinçonnage au moins une zone du premier bord (10) du premier manchon (3), de manière à former une protubérance coopérant avec la bague (6) pour augmenter la tenue à un effort de démanchement.

8. Procédé de fabrication selon la revendication 7, dans lequel on déforme plusieurs secteurs du premier bord (10) du premier manchon (3).

9. Procédé de fabrication selon la revendication 7, dans lequel on déforme le premier bord (10) du premier manchon (3), de manière circulaire et continue autour du premier passage (9).

10. Procédé de fabrication selon l'une des revendications 7 à 9, dans lequel on procède à un poinçonnage du premier (10) et d'un deuxième (14) bords entourant les orifices axiaux du premier passage (9).

## Claims

1. A vibration-damping link comprising:
a metal body (2) that is elongate in a longitudinal direction (X) and that interconnects a first end sleeve (3) and a second end sleeve (4), both of which are part of the body (2), said first and second sleeves (3 and 4) being provided with respective ones of first and second passageways (9) that extend through the body (2) along respective ones of first and second axes (Y1, Y2), the first sleeve (3) being provided with at least a first edge (10) surrounding the first passageway;
at least one inner strength member (5) surrounded by a first sleeve (3) and mounted to move inside the first passageway (9), said inner strength member (5) having a tubular shape centered on said first axis (Y1);
at least one ring (6) surrounding the inner strength member (5) and adapted to be inserted into and to be held in the first passageway (9), said ring (6) also extending along the first axis (Y1) and having a tubular shape centered on said first axis (Y1);
at least one flexible coupling (7) made of elastomer, interposed between the inner strength member (5) and the ring (6), said flexible coupling (7) being adhered and overmolded on the inner strength member (5) and on the ring (6);
said vibration-damping link being **characterized in that** at least the first edge (10) of the first sleeve (3) is provided with at least one deformed zone that is deformed by punching the metal body (2), so as to form a
protuberance (13) co-operating with the ring (6) for increasing to a disengagement force.

2. A vibration-damping link according to claim 1, provided with a second edge (14) surrounding the first passageway (9) and provided with at least one deformed zone (15, 17) that is deformed by punching the metal body (2), so as to form a protuberance co-operating with the ring (6), the first and second edges (10 and 14) surrounding the axial orifices of the first passageway (9).

3. A vibration-damping link according to any preceding claims, provided with a plurality of deformed zones (17) that are deformed by punching the metal body (2) and that are distributed around the first passageway (9).

4. A vibration-damping link according to claim 1 or claim 2, provided with a deformed zone (15) that is deformed by punching the metal body (2) and that surrounds the passageway (9) continuously.

5. A vibration-damping link according to any preceding claims, in which at least one of the deformed zones (13, 17) that is deformed by punching the metal body (2) exerts stress on the ring (6) that is adapted to deform said ring towards the first axis (Y1)

6. A vibration-damping link according to any preceding claims, in which the ring (6) is made of a plastics material.

7. A method of manufacturing a vibration-damping link (1) according to any preceding claim, comprising steps consisting in:
fitting the assembly constituted by the ring (6), by the flexible coupling (7) and by the inner strength member (5) into the first passageway (9) while causing the axes (Y1) in which the first passageway (9) and the ring (6) extend to coincide; and in
deforming by punching at least one zone of the first edge (10) of the first sleeve (3), so as to form a protuberance co-operating with the ring (6) for increasing resistance to a disengagement force.

8. A manufacturing method according to claim 7, in which a plurality of sectors of the first edge (10) of the first sleeve (3) are deformed.

9. A manufacturing method according to claim 7, in which the first edge (10) of the first sleeve (3) is deformed circularly and continuously around the first passageway (9).

10. A manufacturing method according to any one of claims 7 to 9, in which the first edge (10) and a second edge (14) that surround respective ones of the axial orifices of the first passageway (9) are punched.

## Patentansprüche

1. Schwingungsdämpfende Pleuelstange, umfassend
- einen metallischen Körper (2), der in eine Längsrichtung (X) ausgedehnt ist und der eine erste (3) und eine zweite (4) Endmuffe miteinander verbindet, die zu dem Körper (2) gehören, wobei die erste (3) und die zweite (4) Muffe einen ersten (9) beziehungsweise einen zweiten Durchgang aufweisen, die den Körper (2) durchqueren und sich entlang einer ersten (Y1) beziehungsweise einer zweiten (Y2) Achse erstrecken, wobei die erste Muffe (3) mit wenigstens einem ersten Rand (10) ausgestattet ist, der den ersten Durchgang (9) umgibt,
- wenigstens ein Innenausrüstungsteil (5), das von der ersten Muffe (3) umgeben ist und im Inneren des ersten Durchgangs (9) beweglich ist, wobei das Innenausrüstungsteil (5) eine röhrenartige Form aufweist, die an der ersten Achse (Y1) zentriert ist,
- wenigstens einen Ring (6), der das Innenausrüstungsteil (5) umgibt und dazu angepasst ist, in den ersten Durchgang (9) eingeführt und darin gehalten zu werden, wobei dieser Ring (6) sich auch entlang der ersten Achse (Y1) erstreckt und eine röhrenartige Form aufweist, die an der ersten Achse (Y1) zentriert ist,
- wenigstens eine flexible Elastomer-Verbindung (7), die zwischen dem Innenausrüstungsteil (5) und dem Ring (6) angeordnet ist, wobei die flexible Verbindung (7) dem Innenausrüstungsteil (5) und dem Ring (6) anhaftet und an diesen ausgeformt ist,
**dadurch gekennzeichnet, dass** wenigstens der erste Rand (10) der ersten Muffe (3) mit wenigstens einem Bereich ausgestattet ist, der durch Stanzen des metallischen Körpers (2) deformiert wurde, so dass ein Vorsprung (13) gebildet wird, der mit dem Ring (6) zusammenwirkt, um den Halt gegenüber einem Streben nach Entfernen der Muffen zu erhöhen.

2. Schwingungsdämpfende Pleuelstange nach Anspruch 1, umfassend einen zweiten Rand (14), der den ersten Durchgang (9) umgibt, mit wenigstens einem Bereich (15, 17), der durch Stanzen des metallischen Körpers (2) deformiert wurde, so dass ein Vorsprung gebildet wird, der mit dem Ring (6) zusammenwirkt, wobei der erste (10) und der zweite (14) Rand die axialen Öffnungen des ersten Durchgangs (9) umgeben.

3. Schwingungsdämpfende Pleuelstange nach einem der vorhergehenden Ansprüche, umfassend mehrere Bereiche (17), die durch Stanzen des metallischen Körpers (2) deformiert wurden und um den ersten Durchgang (9) herum verteilt sind.

4. Schwingungsdämpfende Pleuelstange nach einem der Ansprüche 1 und 2, umfassend einen Bereich (15), der durch Stanzen des metallischen Körpers (2) deformiert wurde, der den ersten Durchgang (9) in durchgehender Weise umgibt.

5. Schwingungsdämpfende Pleuelstange nach einem der vorhergehenden Ansprüche, wobei wenigstens einer der Bereiche (13, 17), die durch Stanzen des metallischen Körpers (2) deformiert wurden, eine Spannung auf den Ring (6) ausübt, die dazu angepasst ist, letzteren in die Richtung der ersten Achse (Y1) zu deformieren.

6. Schwingungsdämpfende Pleuelstange nach einem der vorhergehenden Ansprüche, wobei der Ring (6) aus Kunststoff besteht.

7. Verfahren zur Herstellung einer schwingungsdämpfende Pleuelstange (1) nach einem der vorhergehenden Ansprüche, umfassend die Schritte:
- Einsetzen der aus dem Ring (6), der flexiblen Verbindung (7) und dem Innenausrüstungsteil (5) bestehenden Anordnung in den ersten Durchgang (9), wobei die Achsen (Y1), entlang derer sich der erste Durchgang (9) und der Ring (6) erstrecken, im Wesentlichen in Übereinstimmung gebracht werden, und
- Deformieren wenigstens eines Bereichs des ersten Rands (10) der ersten Muffe (3) durch Stanzen, so dass ein Vorsprung gebildet wird, der mit dem Ring (6) zusammenwirkt, um den Halt gegenüber einem Streben nach Entfernen der Muffen zu erhöhen.

8. Herstellungsverfahren nach Anspruch 7, wobei mehrere Abschnitte des ersten Rands (10) der ersten Muffe (3) deformiert werden.

9. Herstellungsverfahren nach Anspruch 7, wobei der erste Rand (10) der ersten Muffe (3) kreisförmig und um den ersten Durchgang (9) herum durchgehend deformiert wird.

10. Herstellungsverfahren nach einem der Ansprüche 7 bis 9, wobei Stanzen des ersten (10) und eines zweiten (14) Rands, die die axialen Öffnungen des ersten Durchgangs (9) umgeben, durchgeführt wird.
